# EUROPEAN PATENT SPECIFICATION

(11) **EP 4 060 297 B1**
(45) Date of publication and mention of the grant of the patent: **09.07.2025**
(21) Application number: 21163395.3
(22) Date of filing: 18.03.2021
(51) Int. Cl.: G01G 23/01, G01G 17/04

(54) **CALIBRATION DEVICE FOR WEIGHING SYSTEMS**
KALIBRIERVORRICHTUNG FÜR EIN WÄGESYSTEM
DISPOSITIF D'ÉTALONNAGE POUR SYSTÈMES DE PESAGE

(43) Date of publication of application: 21.09.2022
(73) Proprietor: Eilersen Calibration Solutions ApS, 2980 Kokkedal (DK)
(72) Inventor: EILERSEN, Frederik Juul, 2960 Rungsted (DK)
(74) Representative: Dragsted Partners A/S

(56) References cited:
- WO-A1-2004/088259
- WO-A1-2020/057034

## Description

### TECHNICAL FIELD

A calibration device for weighing systems, the calibration device comprising: a housing, a first attachment part configured to be attached with a container, and a second attachment part configured to be attached with a base.

### BACKGROUND

Tanks or large vessels are often used in manufacturing facilities, such as in the pharmaceutical and food industry, to store ingredients or a mixture of components for production of a product, where the product may be mixtures of two or more components. These storage or mixing vessels are often provided with a weighing system, so that the users of the vessels know how much of the product is present in the vessel, or so that the users can extract a certain amount of product or dose from the tank, and where the weighing system is capable of providing a representation of the amount and/or mass of the extracted product.

The weighing systems are often in the form of one or more load cells, where the load cells are capable of rendering a representation of the force applied to the load cell via the tank, and where the representation may be utilized to extract a unit representing a weight or a mass of the tank and/or the contents of the tank. The weighing systems need to be calibrated periodically to ensure that the weighing systems reproduce a correct representation of the mass present inside the container.

There are a number of ways such calibrations may be performed. One method of calibrating a tank system may be where the tank is emptied, and where a predefined amount of purified liquid, such as purified water, is used to fill the tank from its empty state and to its full state. During the filling, the amount of liquid applied into the vessel is monitored with a flowmeter, so that it is possible to follow the curve of the weighing system from its empty state to a full state, using this data to confirm that the weighing system is operating correctly, or to calibrate the weighing system to the results of the filling of the tank to ensure that future measurements are correct. This calibration technique is very time-consuming and expensive, as the vessel has to be emptied and cleaned prior to the calibration, and has to be cleaned subsequently to the calibration to prepare the container for the components the tank is to receive. Furthermore, when this calibration method is used, the liquid used for the calibration has to be discarded, as the liquid is no longer clean. Thus, this calibration technique may be seen as very time-consuming, and expensive, as the purified liquid might cost in the vicinity of EUR 1 per liter, and each container may be capable of holding up to 40,000 liters or more. Thus, the cost of the liquid may be a very significant factor during calibration. Furthermore, the time-consuming calibration method using liquid means that the vessel cannot be used for production, which limits the production capacity.

Another method for calibration of the weighing system may be where a tension load cell and a hydraulic piston are attached in one end in series to a tank, and where an opposite end is attached to a foundation. By applying hydraulic force to pull the tank towards the foundation, the tension load cell will indicate the amount of force which is applied to the tank, and where the output of the weighing system may be compared to the force applied by the hydraulic piston. However, this type of calibration system may be seen as very bulky due to the size of the hydraulic piston and the load cell, which makes it difficult to retrofit this type of system to an existing container, especially when containers are placed close to each other in a manufacturing facility. Furthermore, the accuracy of tension load cells may be relatively low, where the output may have an error of ± 0.10%, which reduces the quality of the calibration.

WO 2004/088259 discloses a device and a method for calibrating weighing devices, where the weighing device is loaded for the calibration process on the basis of a calibration device that can be detachably connected to the weighing device.

Thus, there may be a need to provide a more compact and accurate calibration system with easier handling for bulk containers.

### DESCRIPTION

In accordance with the invention there is provided a calibration device for weighing systems, the calibration device comprising: a housing having a top part and a bottom part, and a side wall connecting the top part to the bottom part, where an inner surface of the top part and an inner surface of the bottom part define an upper and lower boundary for a housing volume, a first attachment part configured to be attached with a container, a second attachment part configured to be attached with a base, a compression load cell having a base end and a load receiving end, a hydraulic device comprising a device body and a piston having a force application axis, the piston having a first end and a second end, where the first end is attached with the first attachment part or the second attachment part, and the second end is configured to apply force to the compression load cell, wherein the device body is connected with the inner surface of the top part, and the base end of the compression load cell is connected with the inner surface of the bottom part, thereby fixing the device body and the compression load cell relative to each other.

Within the understanding of the present invention the term load cell may be understood as a force transducer, where it may convert force into an electrical signal that may be measured and standardized. The increase of force applied to the load cell may cause the electric signal to change proportionally. A tension load cell may be seen as a load cell where a tension force is translated into an electrical signal. A compression load cell may e.g. be a load cell where the body of the load cell may deform upon application of a compression force, and where sensors positioned on or in the load cell are capable of registering the deformation of the load cell and transform the deformation into an electrical signal.

A compression load cell generally has smaller dimensions than a tension load cell, especially in the direction of force application, where a tension load cell is capable of e.g. 7.5 tonnes and has a length in the direction of force application of e.g. 120 mm, where a compression load cell capable of measuring the same amount of force may have a length that is less than half of the length of the tension load cell. Thus, a compression load cell may be used in positions where there may not be enough room for a tension load cell and a pull type hydraulic cylinder that are serially connected between the tank and the foundation (base). Furthermore, compression load cells, such as Eilersen Compression Load Cell CL (CL-Ex), has a smaller deflection ratio, i.e. deflection length per unit of force, than tension load cells. This means that it is possible to apply a compression load cell in a calibration device in a position which is limited in distance between the vessel/tank and the foundation.

The provision of a calibration device having a compression load cell means that the calibration device may provide high precision on the measurements applied to the load cell, as generally a compression load cell is more precise than a tension load cell. Thus, when the weighing system of a tank is to be calibrated, this can be done more precisely using a compression load cell as a compression load cell may be more precise than a tension load cell, as is known in the art. Within the context of the present invention, the term tank may mean any form of vessel or container that is capable of holding a predetermined amount of content. Thus, the term tank may mean a hopper, a container, a repository, a vessel or any kind of known type of a container that may be positioned on a foundation and is to be weighed.

Within the understanding of the present invention, the term leg and/or supporting leg may mean any form of support member that is capable of holding a tank, container or vessel relative to a foundation. This means that a support bracket used to suspend a tank above a deck may be understood as a support leg or a support member.

However, traditionally it has been found that it is easier to utilize a tension load cell when a calibration system has been utilized with e.g. tanks, as the construction of such a system is simple, where each device is serially connected so that a tension force applied between a base (foundation) and a tank may be applied via a hydraulic device which e.g. pulls on a tension load cell. However, it has been found that this type of tension application for calibration is difficult to retrofit to existing tanks and that the measurement precision is not reliably accurate enough for many applications.

Thus, the present disclosure utilizes a different type of load cell, where the tension force applied between a foundation (base) and a tank is applied to the compression load cell via a piston. The piston may in one end be connected to the tank or a base and where an application of a tension force between the piston and the tank or base causes an application of force on the weighing system of e.g. a tank. The tension force may be applied via a hydraulic device, where the hydraulic device may e.g. apply a force along a direction of a force application axis, and where force is directly translated to the piston to translate the force directly to the tank and/or the base. When the force is applied to the piston along the force application axis, the first end of the piston pulls onto the tank or the base, while the second end of the piston may communicate an equal or a proportional force to the load receiving end of the compression load cell, where the force applied to the compression load cell may be translated into an electrical signal, where the electrical signal represents the amount of force that is applied to the first end of the piston, and thereby an indication of the magnitude of tension force that is applied to the weighing system.

The calibration device may be connected between the base and the container in parallel to the weighing system of the container.

The hydraulic device may be of the kind where the first and the second end of the piston may be exposed, and/or where upon an application of hydraulic force, the first end of the piston may be manoeuvred in a direction towards the hydraulic device, while the second end of the piston may be manoeuvred in a direction away from the hydraulic device when a force is applied via the hydraulic device in the direction of the force application axis. The piston may pull onto the base and/or the tank to calibrate the weighing system, while the opposite end of the piston may push onto the compression load cell.

Thus, the force applied to the weighing system may be directly transferred to a compression load cell, allowing the compression load cell to register the force applied in the form of an electrical signal that represents the force applied, where the electrical signal may be utilized to calibrate the weighing system.

A calibration system, as disclosed, may have a housing that is of a size where the calibration system may easily be retrofit to a tank, as the housing and the remaining parts of the calibration system may be packed in a relatively small volume. Thus, when e.g. a container is positioned on legs that are relatively small (i.e. in height), the compact size of the calibration device ensures that the calibration device may be attached between the container and the foundation.

In one exemplary embodiment, the base end of the compression load cell may be fixed to a first end of the housing and/or where the load receiving end of the compression load cell faces the second end of the piston. The housing may be a rigid housing, where the base of the compression load cell is attached to the first end of the housing, preferably to an inner surface of a first end plate of the housing, where the housing may provide a counterforce to a force applied to the load receiving end of the load cell. Thus, the housing may remain substantially inflexible when a force is applied to the compression load cell.

In one exemplary embodiment, the first and/or the second attachment part may be attached to the housing, allowing the housing to be attached to the tank and/or the foundation via the attachment part, and the housing. Thus, when a tension force is applied between the first attachment part and the second attachment part, one of the attachment parts will maintain a fixed position relative to the housing, while the other attachment part may move relative to the housing and/or be configured to provide a tension force between the tank and the foundation.

In one exemplary embodiment, the second end of the piston may be in communication with the load receiving end of the compression load cell, so that a force applied via the hydraulic device is transferred to the load receiving end of the compression load cell. This means that when a tension force is applied between the first attachment part and the second attachment part, allowing tension force to be applied to a weighing system which may be installed for a vessel, so that the tension force is applied to a load cell, the second end of the piston may come directly or indirectly into contact with the load receiving end. The second end of the piston may be in contact with the load receiving end of the compression load cell when the calibration is to be commenced. As a compression load cell is capable of providing a proportional electrical signal that corresponds to the force applied to the load cell, the readout of the load cell may be set to zero for the calibration, even though a force is applied to the load cell. The increase of tension between the tank and the base, where the tension is applied via the hydraulic device and extends in a direction along the force application axis, and where the second end of the piston applies an equal force to the load receiving end of the compression load cell so that the compression load cell can measure and/or sense the force of the tension, and thereby use the output of the compression load cell to calibrate the weighing system.

In one embodiment, the force application axis may be coaxial with a load receiving axis of the load receiving part of the load cell. The load receiving axis of the compression load cell may be in a direction that is normal (perpendicular) to the base of the compression load cell, so that the force application of the hydraulic device may be introduced into the compression load cell in a direction that is optimal for the compression load cell, and that the force applied via the hydraulic device may be applied to an optimal direction of the load cell. This means that the forces that are applied via the hydraulic device in the direction of the force application axis may be fully absorbed by the compression load cell via deformation of the load cell in an optimal manner. It may be understood that a force that is applied in a direction that may not be seen as normal to the base of the load cell may cause inaccuracies in the force registration of the load cell due to an unintended deformation of the load cell, e.g. where the load cell deforms more on one side than on another side.

In one exemplary embodiment, the hydraulic device may be fixed relative to the housing, and/or where the piston is moveable along a force application axis (central axis) relative to the housing. The housing may be seen as a static part of the calibration device, where the position of a body of the hydraulic device may be fixed relative to the housing and thereby may also be fixed relative to the compression load cell. Thus, the hydraulic device and the housing may create a stable base for the compression load cell and may be seen as a static part of the calibration device, and where the piston is moveable along the force application axis, or the central axis of the housing, relative to the housing, the compression load cell and the body of the hydraulic device. Thus, when the piston is moved in a direction of the force application axis, the first end and the second end of the piston may move relative to the compression load cell. Thus, when the piston is moved using the hydraulic device in a direction away from the load cell, the first end and the second end move in a direction away from the load cell. Likewise, when the piston is moved using the hydraulic device in a direction towards he load cell, the first end and the second end move in a direction towards the load cell.

In one exemplary embodiment, a tension force applied to the first end of the piston may be transferred as a compression force into the compression load cell. This means that the piston may be utilized to apply a tension force to a connection that extends from the foundation of a tank and towards the tank, where the foundation may e.g. be connected to the first attachment part, and the tank may be connected to the second attachment part, allowing the hydraulic device to apply tension between the tank and the foundation. Thus, the tank may be connected to the foundation via the calibration device and/or brackets extending from the attachment parts and towards the tank and/or the foundation. The calibration device may be connected in parallel to the weighing system, where the tension force applied via the calibration device is transformed into a compression force onto the weighing system. Thus, the calibration device may pull the container/tank downwards towards the base, where the weighing system of the container may register the force applied via the calibration device, and the amount of the force applied via the calibration device may be used to calibrate the weighing system by a comparison of the values of the weighing system and the calibration device. Should a container be of a size where a plurality of calibration devices are to be used, the force applied by each calibration device may be summed to the total force being applied to the container. This may e.g. be the situation where a calibration device is positioned on each corner of a container or is distributed along a circumferential periphery of the container at a predetermined angle, e.g. where each calibration device is positioned at 90 degrees relative to the adjacent calibration device. In another embodiment, one calibration device may be utilized, e.g. where the calibration device may be attached to a bottom part of the container, in a central position of the container, and the calibration device may pull the container in a direction towards the base.

In one exemplary embodiment, the hydraulic device may have a hollow cylinder bore. The hydraulic device may have a hollow cylinder bore, where the force of the hydraulic device may be applied via the hollow cylinder. The hollow cylinder may extend from a first end towards a second end of the hydraulic device, allowing access into the bore via the first and/or the second end of the hydraulic device. The piston may be positioned inside the bore of the hollow cylinder and fixed in its position relative to the hollow cylinder, so that when a force is applied to the hollow cylinder, the hollow cylinder will apply the same amount of force to the piston. The piston, when positioned inside the hollow cylinder, may extend beyond the first and/or the second terminal ends of the hollow cylinder, so that the piston may extend from the inside of the hollow cylinder and to the outside of the hollow cylinder in the direction of the force application axis. The hollow cylinder bore may have a central axis that is coaxial to the force application axis of the hydraulic device.

In one exemplary embodiment, the piston may comprise a force application rod, where the force application rod extends along a central axis of the hydraulic device, and optionally where the force application rod is coaxial with a force application axis of the hydraulic device. The force application rod may be positioned inside the hydraulic device and may be exposed on a first end of the hydraulic device and/or the second end of the hydraulic device. The force application rod may be in the form of a solid member that has a first end and a second end, where the first end and/or the second end may define parts of the piston or may be in direct or indirect contact with the piston. The force application rod may define a part of the piston, or where the piston may extend in a direction along the force application axis from a first end or a second end of the force application rod.

In one exemplary embodiment, the housing may comprise a housing volume, and where the compression load cell and/or the hydraulic device are positioned inside the housing volume. The housing may have a bottom part, a top part and one or more side walls, where the inner surface of the bottom part and/or the top part and/or the side walls may define at least a part of the outer border of the housing volume. The compression load cell and/or the hydraulic device may be at least partly positioned inside the housing volume, allowing the bottom part (base part), top part and/or the side wall to encase at least part of the components of the calibration device. This means that the housing may protect the components of the calibration device from outside forces, such as mechanical forces, as the housing may be positioned between the components and/or the outside environment, and thereby come into contact with the housing before coming into contact with the component. Thus, the housing may cage the components of the calibration device from the outside environment.

In one exemplary embodiment, an outer boundary of the compression load cell and/or an outer boundary of the hydraulic device may be fully inside the housing volume. The outer boundary of the hydraulic device may be seen as the body of the hydraulic device, and not a piston rod, a force application rod or other parts of the hydraulic device that are intended to apply a force to a tank and/or a container. The housing may encapsule the compression load cell and/or the body of the hydraulic device, e.g. in order to provide a clean and protected environment for the compression load cell, and possibly to protect the contact surface between the load application end and the piston of the hydraulic device. This means that there is less risk that dirt and/or moisture may enter the space between the load application end and the piston, so that there is a reduced risk that dirt or particles positioned between the surfaces cause measurement or force application errors.

In one exemplary embodiment, the first attachment part may be displaceable relative to the second attachment part in a direction parallel to a central axis of the housing, or vice versa. This means that the second attachment part may be seen as a static part of the calibration device, where the first attachment part may be seen as an active part of the calibration device. The first attachment part may be in communication with the piston, so that when the hydraulic device is activated and is configured to apply a force, the first attachment part may move relative to the second attachment part. When the calibration device is adapted to apply a force between a container and a base/foundation, the calibration device may have a static length from the base to the first and/or second attachment part, and between the container and the first and/or second attachment part, where the varying length of the calibration device may be the distance from the first attachment part to the second attachment part. When the calibration device is utilized to apply a tension force, the tension force may be applied between the first attachment part and the second attachment part, so that the first attachment part is moved by the hydraulic device closer to the second attachment part, thereby shortening the distance between the container and the base. Upon a release of force, the first attachment part may be moved by the hydraulic device away from the second attachment part, thereby increasing the distance between the first attachment part and the second attachment part.

In one embodiment, the compression load cell and/or the hydraulic device may be positioned in a region that is on an axis extending between the first attachment part and the second attachment part. Thus, the compression load cell and/or the hydraulic device may be positioned in a region between the first attachment part and the second attachment part.

Within the understanding of the present invention, the first attachment part may be connected to the base, and the second attachment part may be connected to the vessel, so that the calibration device may be rotated 180 degrees. An important part of the device is that the first attachment part is capable of moving relative to the second attachment part, or vice versa, using hydraulic force and applying a force to the compression load cell.

In one embodiment, the force application axis may intersect the first attachment part and/or the second attachment part. This means that the first attachment part and/or the second attachment part may be positioned so that a force applied to the attachment parts may be coaxial with the force application axis of the piston and/or the hydraulic device.

The present disclosure also relates to a calibration system for weighing systems, wherein the calibration system comprises a tank with one or more support legs configured to attach the tank to a foundation, at least one load cell being positioned between the tank and the foundation, wherein the at least one load cell is configured to measure a force applied between the tank and the foundation, where the tank comprises a first attachment device, and the foundation comprises a second attachment device, where the calibration device in accordance with the present disclosure is attached to the first attachment device and the second attachment device in order to provide a tension force from the tank to the foundation.

### BRIEF DESCRIPTION OF THE DRAWINGS

The following is an explanation of exemplary embodiments with reference to the drawings, in which:
Fig. 1 shows a perspective view of a calibration device,
Fig. 2 shows a side cross-sectional view of a calibration device,
Fig. 3 shows a top view of a calibration device,
Fig. 4 shows a top cross-sectional view of a calibration device,
Figs. 5a and 5b show a front view of a calibration device,
Fig. 6 shows a calibration device attached to a container and a foundation,
Fig. 7 shows a calibration system attached to a container and a foundation,
Fig. 8 shows an embodiment of a calibration system attached to a container and a foundation, and
Fig. 9 shows an embodiment of a calibration system for a weighing system of a vessel suspended from a deck.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practised in any other embodiments even if not so illustrated, or if not so explicitly described.

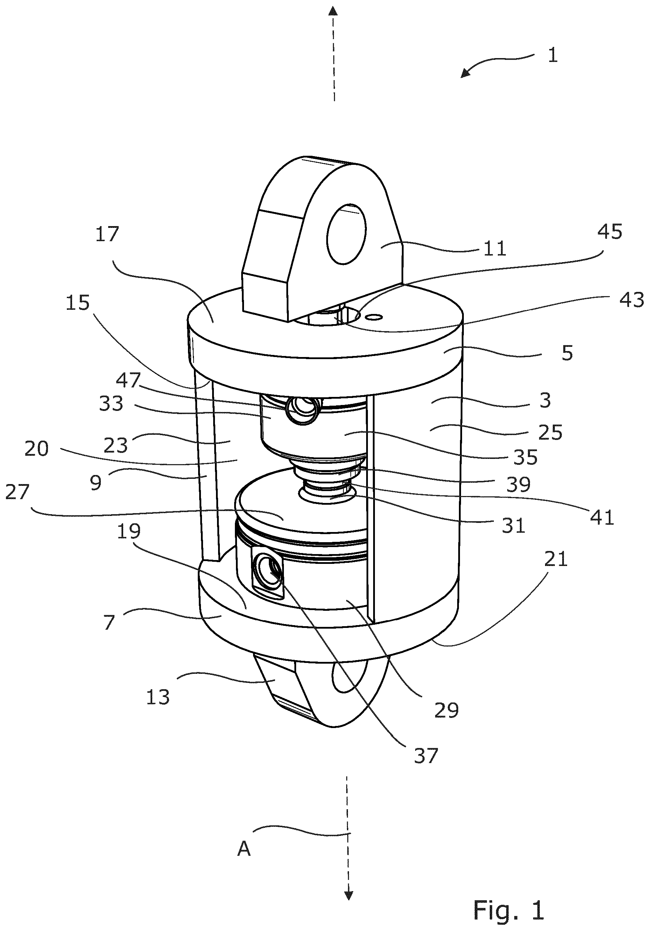

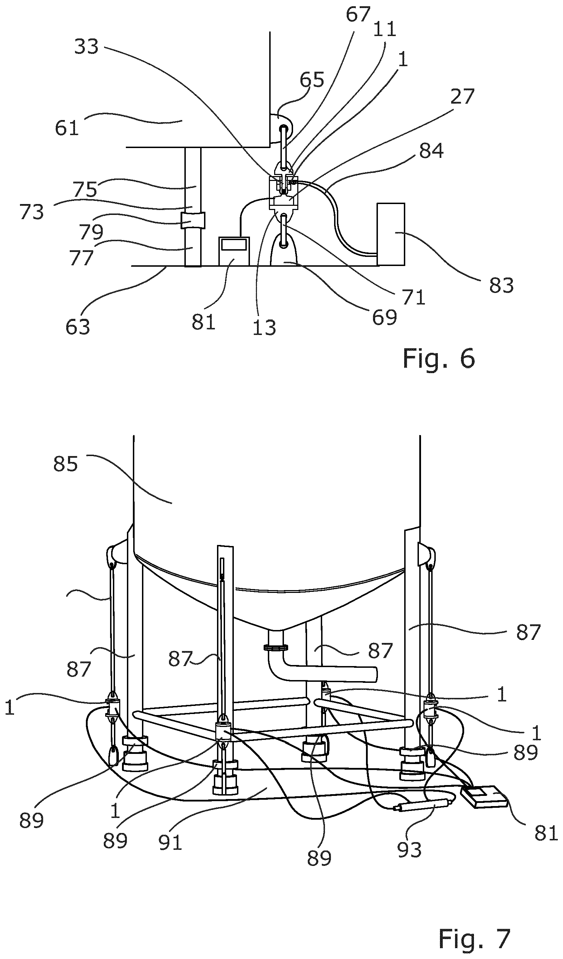

Fig. 1 shows a perspective view of a calibration device 1, where the calibration device comprises a housing 3, where the housing 3 comprises a top part 5 and a bottom part 7, and a side wall 9 connecting the top part 5 to the bottom part 7. The calibration device 1 further comprises a first connecting (attachment) part 11 and a second connecting (attachment) part 13, where the connecting parts 11, 13 are adapted to connect the calibration device to a container and a foundation, as shown in fig. 6. The top part 5 has an inner surface 15 and an outer surface 17, while the bottom part has an inner surface 19 and an outer surface 21. The inner surface 15 of the top part 5 and the inner surface 19 of the bottom part may define upper and lower boundaries for a housing volume 20. The side wall 9 may have an inner surface 23 and an outer surface 25, where the inner surface 23 of the side wall 9 may define at least part of a radial periphery of the housing volume 20.

The housing 3 may comprise a compression load cell 27 where the compression load cell 27 may have a base part 29 and a load receiving part 31 where the base part 29 may be attached, optionally fixedly attached to the inner surface 19 of the bottom part 7, allowing the bottom part 7 to function as a base or a counterforce to the compression load cell 27. The load receiving part 31 of the load cell may be adapted to receive a mechanical force in a direction towards the load receiving part along a force application axis A. The compression load cell 27 is thereby capable of transforming the force to an electrical signal, where the electrical signal represents the magnitude of the force applied to the load receiving part 31. The electrical signal may be output from the compression load cell 27 via an electrical connector 37 of the compression load cell 27, where the electrical connector 37 may provide a data and power interface to the compression load cell 27.

The calibration device 1 may further comprise a hydraulic device 33, where the hydraulic device 33 has a device body 35 which may be connected with the inner surface 15 of the top part 5 of the housing 3, allowing the top part 5 of the housing 3 to act as a counterforce to the body 35 of the hydraulic device 33. Thus, the body 35 and the compression load cell 27 may be fixed in position relative to each other via the housing 3. The hydraulic device 33 may further comprise a piston 39, where the piston 39 may be moveable in a direction towards and away from the compression load cell 27, parallel to and/or coaxial to the force application axis A. The piston 39 may comprise a first end 41 which faces the compression load cell 27 and an opposite second end 43, where the opposite second end may be connected to the first connecting part 11, allowing the first connecting part 11 to be moveable in a direction towards and away from the compression load cell 27, the device body 35 and/or the housing 3, parallel to and/or coaxial to the force application axis A. The second end 43 of the piston may extend out of a through-going opening 45 in the top part 5 of the housing 3, allowing the second end to connect to the first connecting part 11, allowing a connection to the hydraulic device 33. The piston 39 may be moveable along the force application axis A using hydraulic force, where the hydraulic force may be applied via a hydraulic interface 47 of the hydraulic device 33. The hydraulic interface 47 may be connected to a hydraulic pump (as seen in Fig. 6) via a hydraulic hose (as shown in Fig. 6).

The hydraulic force may be applied in the direction of the force application axis, allowing the piston 39 to move towards the compression load cell 27, so that the first end 41 of the piston may come into contact with the load receiving part 31 of the compression load cell 27 and apply a hydraulic force to the load receiving part 31, allowing the hydraulic force to be measured by the compression load cell 27. The second end of the piston may be connected with a container or a foundation (as shown in Fig. 6) so that a hydraulic force, where the second end 43 and the first attachment part 11 may be maneuvered in a direction towards the bottom part of the housing in the direction of the force application axis A. Thus, the force applied to the foundation and/or the basis via the second end of the piston may be equal to the force applied to the load receiving part 31 of the compression load cell. Thus, the load cell 27 may measure the tension force applied via the calibration device between a container and/or a foundation.

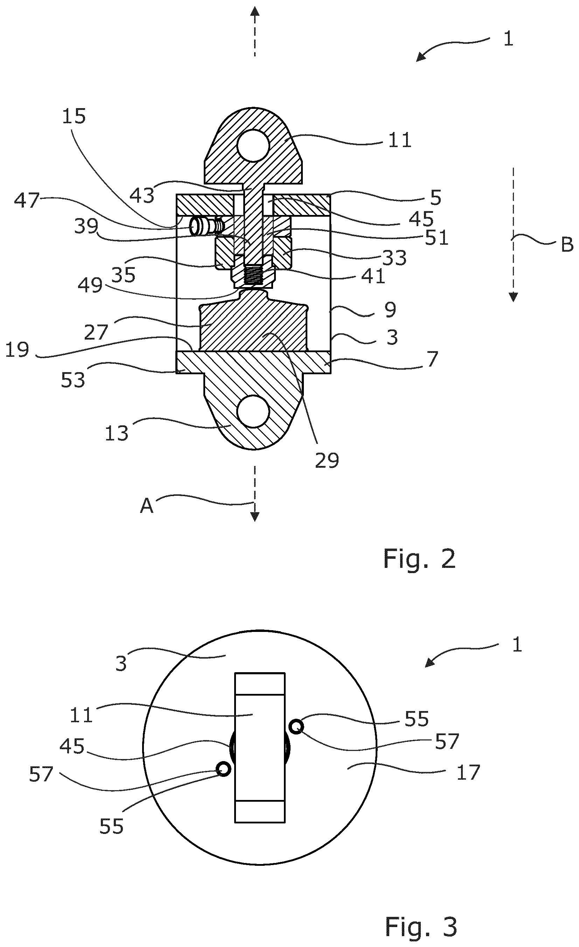

Fig. 2 shows a cross-sectional view of the calibration device 1, seen in Fig. 1, where it may be seen that the opening 45 in the housing 3 provides a passage for the piston 39 through the housing and towards the hydraulic device 33, allowing the piston 39 to be connected to the hydraulic device 33. The piston 39 is fixedly connected via the second end 43 to the first connecting part 11 and to a piston surface 49 via the first end 41 of the piston 39. Thus, the first connecting part 11, the piston 39 and the piston surface 49 are capable of being moved simultaneously, as the parts may comprise a moveable force application unit 51. The body 35 of the hydraulic device 33 may be fixed to the inner surface 15 of the top part 5 of the housing 3, so that the force application unit 51 may be moveable relative to the body 35 of the hydraulic device 33 when the hydraulic device is activated. The top part 5, the side wall 9 and the bottom part 7 of the housing 3 may be immoveable relative to each other, so that the housing 3 is a rigid frame for the compression load cell 27. The second connecting part 13 may be rigidly fixed/connected to the bottom part 7 of the housing 3, so that a force applied to the second connecting part may be transferred directly to the remaining parts of the housing 3. Thus, the housing 3 and the second connecting part 13 may create a counterforce unit 53 which together with the compression load cell will provide counterforce to the force application unit 51. The base part 29 of the compression load cell 27 may be fixedly attached to the inner surface 19 of the bottom part 7.

The force application unit 51 may be moved via the hydraulic device 33, where hydraulic fluid may be pumped into the hydraulic interface 47, and where the pressure of the hydraulic fluid may move the force application unit 51 in a direction towards the compression load cell 27, allowing the piston surface to apply a force to the load receiving part 31 of the compression load cell 27 in the direction of arrow B, where the force is measured by the compression load cell 27. The first connecting part 11 and the second connecting part 13 may be connected to a container and a foundation (as shown in Fig. 6), allowing a tension force applied via the hydraulic device 33 to be applied between the first connecting part 11 and the second connecting part 13.

Fig. 3 shows a top view of the calibration device, where the outer surface 17 of the top part 5 may be provided with two attachment openings 55, where the attachment openings 55 allow the hydraulic device 33 (seen in Fig. 2) to be fixedly attached to the top part 5 of the housing 3 via a first and a second fastener 57, such as bolts. Thus, the hydraulic device may e.g. have threads to receive threaded fasteners 57, and the hydraulic device 33 may be securely fixed to the top part 5.

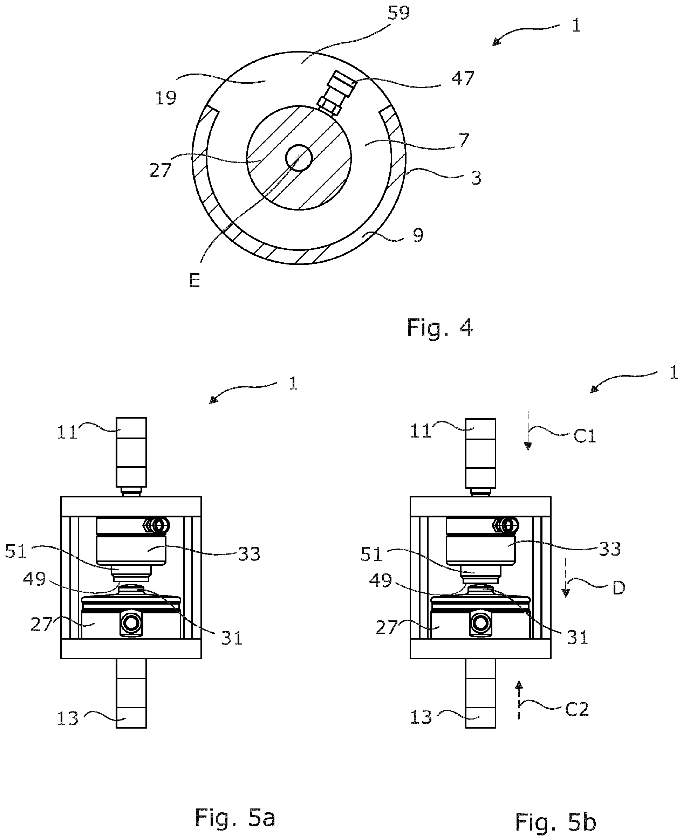

Fig. 4 shows a top cross-sectional view of the housing 3 of the calibration device 1, taken through a plane crossing intersecting the hydraulic device 33. The side wall 9 of the housing 3 may surround the hydraulic device 33 and/or compression load cell 27 (not shown) partly, or in other embodiments may surround the hydraulic device 33 and/or compression load cell 27 (not shown) fully, allowing the compression load cell to be positioned inside the housing volume 20. The side wall 9 may be rigid and may be connected to the inner surface 19 of the bottom part 7. The hydraulic interface 47 may be accessible via a side wall opening 59 provided in the side wall 9 of the housing 3. The force application axis A (shown in Fig. 1) may extend through a central point E of the hydraulic device, where the piston 39 may extend coaxially with the force application axis and the central point E of the hydraulic device 33.

Fig. 5a shows a first state of the calibration device 1, where the piston surface 49 is not in mechanical communication with the load receiving part 31 of the compression load cell 27. Thus, this may represent the calibration device prior to use. Fig. 5b may show the forces that are applied to the calibration device 1, where the application of hydraulic force via the hydraulic device 33 may cause the first connecting part 11, and thereby the force application unit 51, to move in a direction towards the load receiving part 31. As the first connecting part 11 is intended to be rigidly attached to a container, and the second connecting part 13 is intended to be rigidly attached to a foundation, the hydraulic force will cause the first connecting part 11 to apply a tension force C1 in the direction shown by the arrow, and where the second connecting part 13 will apply a counterforce in the opposite direction C2. However, the piston surface 49 will apply a compression force D onto the load receiving part 31 of the compression load cell 27, where the compression force D may be equal to the tension force of C1 and C2, or may at least be directly correlated to the tension force of C1 and C2.

Fig. 6 shows a schematical view of a calibration device 1 used together with a container 61 and a foundation 63. The container 61 may have a container leg 73 which may have an upper part 75 and a lower part 77, where the upper part is connected to the container 61, and the lower part 77 may be connected to the foundation 63. The upper part 75 and the lower part 77 may be separated via a load cell 79 which is capable of measuring the weight of the content of the container 61. Other configurations of the positioning of the load cell 79 relative to the support leg 73 may be envisioned, where the load cell may e.g. be positioned between the tank 61 and the support leg 73 or between the foundation 63 and the support leg 73.

In order to perform a calibration, the first attachment part 11 of the calibration device 1 may be connected to a container attachment part 65 via a first link 67, while the second attachment part 13 of the device 1 may be connected to a foundation attachment part 69 via a second link 71, where the calibration device is intended to apply a tension force between the tank 61 and the foundation 63 to imitate the weight of the content of the container 61, when e.g. the container 63 is full, empty or has a known amount of content, and to calibrate and verify the container load cell 79. The compression load cell 27 of the calibration device 1 may be connected to a control device 81, where the control device 81 may e.g. record and display the force applied by the calibration device. The hydraulic device 33 may be connected to a pump 83, where the pump is configured to provide a hydraulic fluid under pressure to the hydraulic device 33 via a hydraulic hose 84 in order to provide a tension force between the container 61 and the foundation 63.

Fig. 7 shows a perspective view of a tank 85 having four legs 87 and four tank load cells 89 that are configured to weigh the content of the tank 85. The calibration device 1 may be utilized in a calibration system, where one calibration device 1 may be connected between the tank 85 and the foundation 91, e.g. in parallel to each of the load cells 89, similar to that shown in Fig. 6. Each hydraulic device 33 (as shown in Fig. 6) of the calibration device 1 may be connected to a hydraulic source 93 (which may be a pump or a distributor part), allowing the hydraulic fluid to be forced into the calibration devices 1 simultaneously. Likewise, the compression load cells 27 (as shown in Fig. 6) may be connected to a control device 81, where the control device may display and/or record the force applied in real time, where the force applied may be utilized to control the quality and accuracy of the tank load cells 89.

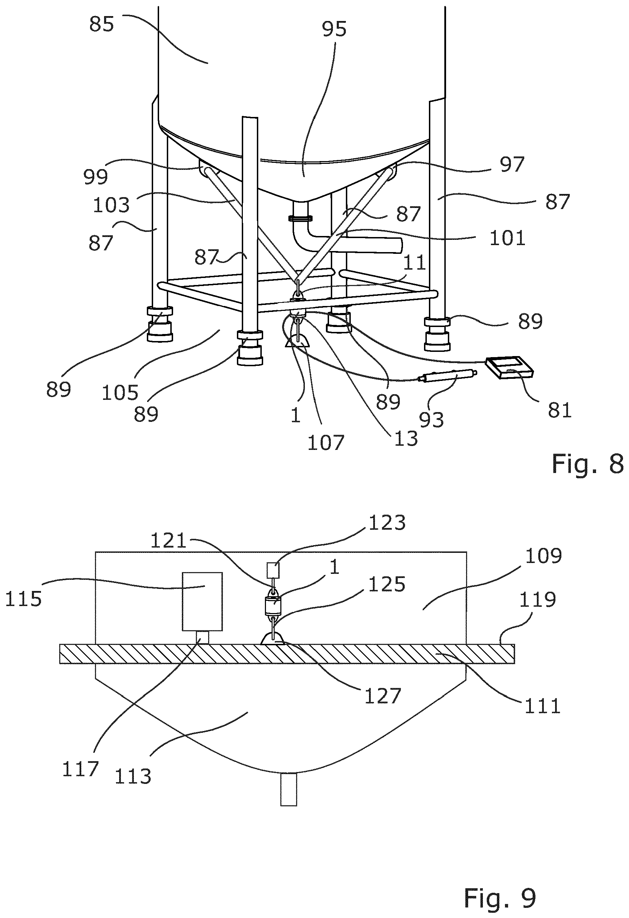

Fig. 8 shows a similar tank 85 to that shown in Fig. 7, where the calibration device 1 may be connected in a different manner to the tank 85 than to that shown in Fig. 7. The tank 85 may be provided with a bottom 95, where the bottom may be provided with a first tank attachment part 97 and a second tank attachment part 99 that are attached to the bottom 95 of the tank 85. In this embodiment of a calibration system, only one calibration device 1 is utilized, where the first attachment part 11 is connected to the first tank attachment part 97 and the second tank attachment part 99 via a first link 101 and a second link 103, respectively. The second attachment part 13 may be connected to the foundation 105 via a foundation attachment 107. The first and second tank attachment parts 97, 99 may be distributed onto the bottom 95 of the tank 85 in such a manner that when a tension force is applied to the calibration device 1, the tension force is distributed equally around the tank load cells 89 that may be positioned at the legs 87 of the tanks 85, and the tension force applied may be utilized to control the quality and accuracy of the tank load cells 89.

Fig. 9 shows a schematical view of a suspended tank 109, where the tank 109 is suspended from a deck 111, and the bottom 113 of the tank is below the deck 111. In this example, the deck may be seen as a foundation or a base for the vessel/container. The tank 109 may be provided with a plurality of load cell brackets 115 that are attached to the tank 109, and where a tank load cell 117 is positioned between the bracket 115 and the surface 119 of the deck 111. The tank load cells 117 may be part of the weighing system of the tank 109.

The calibration device 1 may be attached to the tank 109 and the deck 111 via a first link 121 attached to a tank attachment part 123 and a second link 125 attached to a deck attachment part 127. The calibration device may be positioned centrally between two load cell brackets 115 or may be straddled across one load cell bracket 115. The person skilled in the art would recognize that it is important that the force applied via the calibration device 1 is predictably applied to the tank load cell 117. As an example, if the tank has four brackets 115, one calibration device may be arranged equidistantly between two brackets 115, so that the calibration system has four calibration devices. The present calibration device is advantageous to such applications, as the distance between the top of the tank and the upper surface of the deck may be relatively short.

The use of the terms "first", "second", "third" and "fourth", "primary", "secondary", "tertiary", etc., does not imply any particular order but are included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

### List of references

- 1: Calibration device
- 3: Housing
- 5: Top part of housing
- 7: Bottom part of housing
- 9: Side wall of housing
- 11: First connecting part
- 13: Second connecting part
- 15: Inner surface of top part
- 17: Outer surface of top part
- 19: Inner surface of bottom part
- 20: Housing volume
- 21: Outer surface of bottom part
- 23: Inner surface of side wall
- 25: Outer surface of side wall
- 27: Compression load cell
- 29: Base part of load cell
- 31: Load receiving part of load cell
- 33: Hydraulic device
- 35: Body of hydraulic device
- 37: Electrical connector of load cell
- 39: Piston
- 41: First end of piston
- 43: Second end of piston
- 45: Through-going opening in top part of housing
- 47: Hydraulic interface
- 49: Piston surface
- 51: Force application unit
- 53: Counterforce unit
- 55: Attachment opening
- 57: Fastener
- 59: Side wall opening
- 61: Container
- 63: Foundation
- 65: Container attachment part
- 67: First link
- 69: Foundation attachment part
- 71: Second link
- 73: Container leg
- 75: Upper part of container leg
- 77: Lower part of container leg
- 79: Load cell
- 81: Control device
- 83: Pump
- 85: Tank
- 87: Tank leg
- 89: Tank load cell
- 91: Foundation
- 93: Hydraulic source
- 95: Bottom of tank
- 97: Tank attachment part
- 99: Tank attachment part
- 101: First link
- 103: Second link
- 105: Foundation
- 107: Foundation attachment
- 109: Suspended tank
- 111: Deck
- 113: Bottom of tank
- 115: Load cell bracket
- 117: Tank load cell
- 119: Surface of the deck
- 121: First link
- 123: Tank attachment part
- 125: Second link
- 127: Deck attachment part
- A: Force application axis
- B: Force direction
- C1: Force direction
- C2: Force direction
- D: Force direction

## Claims

1. A calibration device (1) for weighing systems, the calibration device (1) comprising:
- a housing (3) having a top part (5) and a bottom part (7), and a side wall (9) connecting the top part (5) to the bottom part (7), where an inner surface (15) of the top part (5) and an inner surface (19) of the bottom part (7) define an upper and lower boundary for a housing volume,
- a first attachment part (11) configured to be attached with a container (61),
- a second attachment part (13) configured to be attached with a base (63),
- a compression load cell (27) having a base end (29) and a load receiving end (31), and
- a hydraulic device comprising a device body (35) and a piston (39) having a force application axis (A), the piston (39) having a first end (41) and a second end (43), where the first end (41) is attached with the first attachment part (11) or the second attachment part (13), and the second end (43) is configured to apply force to the compression load cell (27),
**characterized in that** the device body (35) is connected with the inner surface (15) of the top part (5), and the base end (29) of the compression load cell (27) is connected with the inner surface (19) of the bottom part (7), thereby fixing the device body (35) and the compression load cell (27) relative to each other.

2. A calibration device (1) for weighing systems in accordance with claim 1, wherein the base end (29) of the compression load cell (27) is fixed to a first end of the housing (3) and/or where the load receiving end (31) of the compression load cell (27) faces the second end (43) of the piston (39).

3. A calibration device (1) for weighing systems in accordance with any of the preceding claims, wherein the second end (43) of the piston (39) is in communication with the load receiving end (31) of the compression load cell (27), so that a force applied via the hydraulic device (33) is transferred to the load receiving end (31) of the compression load cell (27).

4. A calibration device (1) for weighing systems in accordance with any of the preceding claims, wherein the hydraulic device (33) is fixed relative to the housing (3), and/or where the piston (39) is moveable along a force application axis (central axis) relative to the housing (3).

5. A calibration device (1) for weighing systems in accordance with any of the preceding claims, wherein a tension force applied to the first end (41) of the piston (39) is transferred as a compression force into the compression load cell (27).

6. A calibration device (1) for weighing systems in accordance with any of the preceding claims, wherein the hydraulic device (33) has a hollow cylinder bore.

7. A calibration device (1) for weighing systems in accordance with any of the preceding claims, wherein the piston (39) comprises a force application rod (51), where the force application rod (51) extends along a central axis of the hydraulic device (33), and optionally where the force application rod (51) is coaxial with a force application axis of the hydraulic device (33).

8. A calibration device (1) for weighing systems in accordance with any of the preceding claims, wherein the housing (3) comprises a housing (3) volume, and where the compression load cell (27) and/or the hydraulic device (33) are positioned inside the housing (3) volume.

9. A calibration device (1) for weighing systems in accordance with claim 6, wherein an outer boundary of the compression load cell (27) and/or an outer boundary of the hydraulic device (33) is fully inside the housing (3) volume.

10. A calibration device (1) for weighing systems in accordance with any of the preceding claims, wherein the first attachment part (11) is displaceable relative to the second attachment part (13) in a direction parallel to a central axis of the housing (3), or vice versa.

11. A calibration device (1) for weighing systems in accordance with any of the preceding claims, wherein the first attachment part (11) and/or the second attachment part (13) may be attached to the housing (3).

12. A calibration device (1) for weighing systems in accordance with any of the preceding claims, wherein the first attachment part (11) and/or the second attachment part (13) is/are attached to the housing (3), allowing the housing (3) to be attached to the tank and/or the foundation via the attachment part.

13. A calibration device (1) for weighing systems in accordance with any of the preceding claims, wherein the force application axis may be coaxial with a load receiving axis of the load receiving part of the load cell.

14. A calibration system for weighing systems, wherein the weighing system comprises a tank with one or more support members configured to attach the tank to a foundation, comprising
- at least one load cell positioned between the tank and the foundation, wherein the at least one load cell is configured to measure a force applied between the tank and the foundation,
- where the tank comprises a first attachment device, and the foundation comprises a second attachment device,
- where the calibration device (1) in accordance with claims 1-9 is attached to the first attachment device and the second attachment device in order to provide a tension force from the tank to the foundation.

## Patentansprüche

1. Kalibrierungsvorrichtung (1) für Wägesysteme, wobei die Kalibrierungsvorrichtung (1) aufweist:
- ein Gehäuse (3) mit einem Oberteil (5) und einem Unterteil (7) und einer Seitenwand (9), die das Oberteil (5) mit dem Unterteil (7) verbindet, wobei eine Innenfläche (15) des Oberteils (5) und eine Innenfläche (19) des Unterteils (7) eine obere und untere Begrenzung für ein Gehäusevolumen definieren,
- ein erstes Befestigungsteil (11), das dazu ausgebildet ist, an einem Behälter (61) befestigt zu werden,
- ein zweites Befestigungsteil (13), das dazu ausgebildet ist, an einem Sockel (63) befestigt zu werden,
- einen Druckkraftaufnehmer (27) mit einem Sockelende (29) und einem Lastaufnahmeende (31), und
- eine Hydraulikvorrichtung, die einen Vorrichtungskörper (35) und einen Kolben (39) mit einer Krafteinleitungsachse (A) aufweist, wobei der Kolben (39) ein erstes Ende (41) und ein zweites Ende (43) hat, wobei das erste Ende (41) an dem ersten Befestigungsteil (11) oder dem zweiten Befestigungsteil (13) befestigt ist und das zweite Ende (43) dazu ausgebildet ist, Kraft auf den Druckkraftaufnehmer (27) aufzubringen,
**dadurch gekennzeichnet, dass** der Vorrichtungskörper (35) mit der Innenfläche (15) des Oberteils (5) verbunden ist und das Sockelende (29) des Druckkraftaufnehmers (27) mit der Innenfläche (19) des Unterteils (7) verbunden ist, wodurch der Vorrichtungskörper (35) und der Druckkraftaufnehmer (27) relativ zueinander fixiert sind.

2. Kalibrierungsvorrichtung (1) für Wägesysteme gemäß Anspruch 1, wobei das Sockelende (29) des Druckkraftaufnehmers (27) an einem ersten Ende des Gehäuses (3) fixiert ist und/oder wobei das Lastaufnahmeende (31) des Druckkraftaufnehmers (27) dem zweiten Ende (43) des Kolbens (39) zugewandt ist.

3. Kalibrierungsvorrichtung (1) für Wägesysteme gemäß einem der vorstehenden Ansprüche, wobei das zweite Ende (43) des Kolbens (39) mit dem Lastaufnahmeende (31) des Druckkraftaufnehmers (27) in Austausch steht, so dass eine über die Hydraulikvorrichtung (33) aufgebrachte Kraft auf das Lastaufnahmeende (31) des Druckkraftaufnehmers (27) übertragen wird.

4. Kalibrierungsvorrichtung (1) für Wägesysteme gemäß einem der vorstehenden Ansprüche, wobei die Hydraulikvorrichtung (33) relativ zu dem Gehäuse (3) fixiert ist und/oder wobei der Kolben (39) entlang einer Krafteinleitungsachse (Mittelachse) relativ zu dem Gehäuse (3) beweglich ist.

5. Kalibrierungsvorrichtung (1) für Wägesysteme gemäß einem der vorstehenden Ansprüche, wobei eine auf das erste Ende (41) des Kolbens (39) aufgebrachte Zugkraft als Druckkraft in den Druckkraftaufnehmer (27) übertragen wird.

6. Kalibrierungsvorrichtung (1) für Wägesysteme gemäß einem der vorstehenden Ansprüche, wobei die Hydraulikvorrichtung (33) eine Hohlzylinderbohrung hat.

7. Kalibrierungsvorrichtung (1) für Wägesysteme gemäß einem der vorstehenden Ansprüche, wobei der Kolben (39) eine Krafteinleitungsstange (51) aufweist, wobei sich die Krafteinleitungsstange (51) entlang einer Mittelachse der Hydraulikvorrichtung (33) erstreckt, und optional wobei die Krafteinleitungsstange (51) koaxial zu einer Krafteinleitungsachse der Hydraulikvorrichtung (33) ist.

8. Kalibrierungsvorrichtung (1) für Wägesysteme gemäß einem der vorstehenden Ansprüche, wobei das Gehäuse (3) ein Volumen des Gehäuses (3) aufweist, und wobei der Druckkraftaufnehmer (27) und/oder die Hydraulikvorrichtung (33) innerhalb des Volumens des Gehäuses (3) angeordnet sind.

9. Kalibrierungsvorrichtung (1) für Wägesysteme gemäß Anspruch 6, wobei eine äußere Begrenzung des Druckkraftaufnehmers (27) und/oder eine äußere Begrenzung der Hydraulikvorrichtung (33) vollständig innerhalb des Volumens des Gehäuses (3) angeordnet ist.

10. Kalibrierungsvorrichtung (1) für Wägesysteme gemäß einem der vorstehenden Ansprüche, wobei das erste Befestigungsteil (11) relativ zu dem zweiten Befestigungsteil (13) in einer Richtung parallel zu einer Mittelachse des Gehäuses (3) verschiebbar ist, oder umgekehrt.

11. Kalibrierungsvorrichtung (1) für Wägesysteme gemäß einem der vorstehenden Ansprüche, wobei das erste Befestigungsteil (11) und/oder das zweite Befestigungsteil (13) an dem Gehäuse (3) befestigt werden kann.

12. Kalibrierungsvorrichtung (1) für Wägesysteme gemäß einem der vorstehenden Ansprüche, wobei das erste Befestigungsteil (11) und/oder das zweite Befestigungsteil (13) an dem Gehäuse (3) befestigt ist/sind, ermöglichend das Gehäuse (3) über das Befestigungsteil an dem Tank und/oder dem Fundament zu befestigen.

13. Kalibrierungsvorrichtung (1) für Wägesysteme gemäß einem der vorstehenden Ansprüche, wobei die Krafteinleitungsachse koaxial zu einer Lastaufnahmeachse des Lastaufnahmeteils des Kraftaufnehmers sein kann.

14. Kalibrierungssystem für Wägesysteme, wobei das Wägesystem einen Tank mit einem oder mehreren Stützelementen aufweist, die dazu ausgebildet sind, den Tank an einem Fundament zu befestigen, aufweisend:
- mindestens einen Kraftaufnehmer, der zwischen dem Tank und dem Fundament angeordnet ist, wobei der mindestens eine Kraftaufnehmer dazu ausgebildet ist, eine aufgebrachte Kraft zwischen dem Tank und dem Fundament zu messen,
- wobei der Tank eine erste Befestigungsvorrichtung aufweist und das Fundament eine zweite Befestigungsvorrichtung aufweist,
- wobei die Kalibrierungsvorrichtung (1) gemäß einem der Ansprüche 1 bis 9 an der ersten Befestigungsvorrichtung und der zweiten Befestigungsvorrichtung befestigt ist, um eine Zugkraft von dem Tank an das Fundament abzugeben.

## Revendications

1. Dispositif d'étalonnage (1) pour systèmes de pesage, le dispositif d'étalonnage (1) comprenant :
- un boîtier (3) ayant une partie supérieure (5) et une partie inférieure (7), et une paroi latérale (9) reliant la partie supérieure (5) à la partie inférieure (7), où une surface intérieure (15) de la partie supérieure (5) et une surface intérieure (19) de la partie inférieure (7) définissent une limite supérieure et une limite inférieure pour un volume de boîtier,
- une première partie de fixation (11) configurée pour être attachée à un conteneur (61),
- une deuxième partie de fixation (13) configurée pour être fixée à une base (63),
- une cellule de charge de compression (27) ayant une extrémité de base (29) et une extrémité de réception de charge (31), et
- un dispositif hydraulique comprenant un corps de dispositif (35) et un piston (39) ayant un axe d'application de force (A), le piston (39) ayant une première extrémité (41) et une deuxième extrémité (43), où la première extrémité (41) est fixée à la première partie de fixation (11) ou à la deuxième partie de fixation (13), et la deuxième extrémité (43) est configurée pour appliquer une force à la cellule de charge de compression (27),
**caractérisé en ce que** le corps de dispositif (35) est relié à la surface intérieure (15) de la partie supérieure (5), et que l'extrémité de base (29) de la cellule de charge de compression (27) est reliée à la surface intérieure (19) de la partie inférieure (7), fixant ainsi le corps de dispositif (35) et le cellule de charge de compression (27) l'un par rapport à l'autre.

2. Dispositif d'étalonnage (1) pour systèmes de pesage selon la revendication 1, dans lequel l'extrémité de base (29) de la cellule de charge de compression (27) est fixée à une première extrémité du boîtier (3) et/ou dans lequel l'extrémité de réception de charge (31) de la cellule de charge de compression (27) fait face à la deuxième extrémité (43) du piston (39).

3. Dispositif d'étalonnage (1) pour systèmes de pesage selon l'une quelconque des revendications précédentes, dans lequel la deuxième extrémité (43) du piston (39) est en communication avec l'extrémité de réception de charge (31) de la cellule de charge de compression (27), de sorte qu'une force appliquée via le dispositif hydraulique (33) est transférée à l'extrémité de réception de charge (31) de la cellule de charge de compression (27).

4. Dispositif d'étalonnage (1) pour systèmes de pesage selon l'une quelconque des revendications précédentes, dans lequel le dispositif hydraulique (33) est fixe par rapport au boîtier (3), et/ou dans lequel le piston (39) est mobile le long d'un axe d'application de force (axe central) par rapport au boîtier (3).

5. Dispositif d'étalonnage (1) pour systèmes de pesage selon l'une quelconque des revendications précédentes, dans lequel une force de tension appliquée à la première extrémité (41) du piston (39) est transférée en tant que force de compression dans la cellule de charge de compression (27).

6. Dispositif d'étalonnage (1) pour systèmes de pesage selon l'une quelconque des revendications précédentes, dans lequel le dispositif hydraulique (33) a un alésage de cylindre creux.

7. Dispositif d'étalonnage (1) pour systèmes de pesage selon l'une quelconque des revendications précédentes, dans lequel le piston (39) comprend une tige d'application de force (51), où la tige d'application de force (51) s'étend le long d'un axe central du dispositif hydraulique (33), et éventuellement où la tige d'application de force (51) est coaxiale avec un axe d'application de force du dispositif hydraulique (33).

8. Dispositif d'étalonnage (1) pour systèmes de pesage selon l'une quelconque des revendications précédentes, dans lequel le boîtier (3) comprend un volume de boîtier (3), et où la cellule de charge de compression (27) et/ou le dispositif hydraulique (33) sont positionnés à l'intérieur du volume de boîtier (3).

9. Dispositif d'étalonnage (1) pour systèmes de pesage selon la revendication 6 dans lequel une limite extérieure de la cellule de charge de compression (27) et/ou une limite extérieure du dispositif hydraulique (33) est entièrement à l'intérieur du volume du boîtier (3).

10. Dispositif d'étalonnage (1) pour systèmes de pesage selon l'une quelconque des revendications précédentes, dans lequel la première partie de fixation (11) peut être déplacée par rapport à la deuxième partie de fixation (13) dans une direction parallèle à un axe central du boîtier (3), ou vice versa.

11. Dispositif d'étalonnage (1) pour systèmes de pesage selon l'une quelconque des revendications précédentes, dans lequel la première partie de fixation (11) et/ou la deuxième partie de fixation (13) peuvent être fixées au boîtier (3).

12. Dispositif d'étalonnage (1) pour systèmes de pesage selon l'une quelconque des revendications précédentes, dans lequel la première partie de fixation (11) et/ou la deuxième partie de fixation (13) est/sont fixée(s) au boîtier (3), permettant au boîtier (3) d'être fixé au réservoir et/ou à la fondation par l'intermédiaire de la partie de fixation.

13. Dispositif d'étalonnage (1) pour systèmes de pesage selon l'une quelconque des revendications précédentes, dans lequel l'axe d'application de force peut être coaxial avec un axe de réception de charge de la partie de réception de charge de la cellule de charge.

14. Système d'étalonnage pour systèmes de pesage, dans lequel le système de pesage comprend un réservoir avec un ou plusieurs éléments de support configurés pour fixer le réservoir à une fondation, comprenant
- au moins une cellule de charge positionnée entre le réservoir et la fondation, dans lequel ladite au moins une cellule de charge est configurée pour mesurer une force appliquée entre le réservoir et la fondation,
- où le réservoir comprend un premier dispositif de fixation et la fondation comprend un deuxième dispositif de fixation,
- où le dispositif d'étalonnage (1) selon les revendications 1 à 9 est fixé au premier dispositif de fixation et au deuxième dispositif de fixation afin de fournir une force de tension entre le réservoir et la fondation.
